Europäisches Patentamt

European Patent Office

Office européen des brevets

(19)

(11)   EP 0 944 184 A2

(12)   EUROPEAN PATENT APPLICATION

(43) Date of publication:
**22.09.1999   Bulletin 1999/38**

(51) Int Cl.⁶: **H04B 10/08**

(21) Application number: **99105677.1**

(22) Date of filing: **19.03.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.03.1998   JP 7031298**

(71) Applicant: **SONY CORPORATION**
**Tokyo (JP)**

(72) Inventors:
• **Horie, Kazuyoshi, c/o Sony Corporation**
**Tokyo (JP)**
• **Toriumi, Yoichi, c/o Sony Corporation**
**Tokyo (JP)**
• **Yoshida, Hideki, c/o Sony Corporation**
**Tokyo (JP)**
• **Ohkubo, Kenichi, c/o Sony Corporation**
**Tokyo (JP)**
• **Shino, Kuninori, c/o Sony Corporation**
**Tokyo (JP)**

(74) Representative: **Körber, Martin, Dipl.-Phys. et al**
**Mitscherlich & Partner**
**Patentanwälte**
**Sonnenstrasse 33**
**80331 München (DE)**

(54)   **Optical transmitter-receiver and method of checking the connection of an optical fibre to an optical transmitter-receiver**

(57)   To provide an optical transmitter-receiver (1a, 1b, 1c) and a method of checking the connection of an optical fiber (2) to the optical transmitter-receiver, in which checking of the connection of the optical fiber (2) (ascertainment of disconnection) can be performed reliably irrespective of the existence/non-existence of a first optical signal or a second optical signal provided as data. Optical transmitter-receivers (1a, 1b, 1c) are connected to an optical fiber (2) provided as a communication line in an optical communication circuit. Each optical transmitter-receiver (1a, 1b, 1c) inputs to the optical fiber (2) a first optical signal to be transmitted, and receives an incoming second optical signal via the optical fiber. Each optical transmitter-receiver has a transmitting section (1a - 1, 1c - 1) for inputting the first optical signal and a first connection check signal to the optical fiber, a receiving section (1a - 2, 1c - 2) for receiving the incoming second optical signal and an incoming second connection check signal via the optical fiber, and a connection monitoring section (1a - 3, 1c - 3) for inhibiting inputting of the first optical signal and the first connection check signal to the optical fiber if the connection of the optical fiber is not confirmed from the state of receiving of the second connection check signal in the receiving section.

FIG. 3

## Description

BACKGROUND OF THE INVENTION

1. Field of the Invention

The present invention relates to an optical transmitter-receiver which is connected to an optical fiber provided as a communication line in an optical communication circuit, which emits and inputs to the optical fiber a first optical signal to be transmitted, and which receives an incoming second optical signal via the optical fiber. The present invention also relates to a method of checking the connection of the optical fiber to the optical transmitter-receiver.

2. Description of the Related Art

An optical fiber is used to exchange control signals and information signals between apparatuses. An application of such signal exchange to, for example, a home network system has been proposed.

In use of a home network for ordinary users having no knowledge about optical fiber networks, a technique for detecting disconnection of an optical fiber is indispensable for ascertainment of a cause of a malfunction. If the scale of a home optical fiber network is increased, the difficulty of ascertainment of a disconnected optical fiber becomes considerable.

A person or organization who controls such a network is under obligation to ensure safe use of laser by detecting disconnection of an optical fiber and stopping signal light. For example, when bidirectional optical communication over a line is performed, disconnection of an optical fiber or coming-off of an optical connector is detected at one end of the line by monitoring the quantity of laser light received from the other end of the line. This method is effective in a situation where an optical fiber of an optical fiber network is disconnected when the optical fiber network is operating, but entails a problem relating to newly starting an optical fiber network for the following reason.

The maximum quantity of emitted light permissible in terms of safety in a situation where light is accidentally emitted from an optical fiber or an optical transmitter-receiver to a human body is set by the International Electrotechnical Commission in IEC825-1 and IEC825-2, which are international laser safety standards. The output level in accordance with these standards is called "Class 1" and is, for example, only 0.22 mW when the wavelength of transmitted light is 650 nm. That is, in a case where it is not possible to ascertain whether an optical fiber is correctly connected to an optical transmitter-receiver, this quantity of light is the maximum quantity of light allowed to be emitted from the optical transmitter-receiver. If 650 nm light is transmitted to travel 100 m through an optical fiber such as a plastic optical fiber having a large transmission loss (0.14 dB/m), the quantity of light of 0.22 mW introduced into the optical fiber is attenuated to 0.006 mW during 100 m transmission.

If an optical transmitter-receiver having a low sensitivity is used, a signal having a light quantity of 0.006 mW is not strong enough to be reliably recognized by the optical transmitter-receiver. A method is therefore used in which, at a start of the operation of an optical fiber network, if, for example, disconnection has occurred in a trunk optical fiber cable, a monitoring and control circuit detects the disconnection and transmits a wavelength-multiplexed disconnection signal to a repeater station to shut off the transmitting-side optical output (see Japanese Patent Laid-Open Publication 9-46297/1997, for example). However, this technique has been developed by considering long-distance transmission through a trunk system or the like, and cannot be used for a home network or a local area network (LAN) in an office or the like not connected to a repeater station. Also, two or more optical fibers are necessary if a failure signal is transmitted. That is, a disconnected fiber and a fiber for information of the disconnection are necessary. Therefore, this technique cannot be used for bidirectional transmission through one optical fiber.

A conventional technique of informing a transmitting terminal of fiber disconnection by inserting a failure signal in a digital signal is also known (see Japanese Patent Laid-Open Publication 3-94529/1991, for example). However, use of this method is also possible only with a communication channel using two or more optical fibers.

Another conventional technique is known in which an electroconductive material is attached around an optical fiber connector to ascertain whether the connector is inserted in an optical module (see Japanese Patent Laid-Open Publication 5-333226/1993, for example). This method makes it possible to ascertain whether the connection of an optical fiber connector is correctly set, but does not enable detection of a snapped condition of an optical fiber at an intermediate point. Also, this method is disadvantageous in terms of manufacturing cost because of the need for attachment of an electroconductive material and the need for a detection circuit added to an optical module.

In an optical fiber network, if no signal is received, it is necessary to discriminably ascertain whether (1) there is no data to be transmitted or (2) an optical fiber is disconnected or snapped at an intermediate point. If no detector for detecting optical fiber disconnection is provided, it is only recognized that no data is transmitted. The problematic condition can be noticed only when no response is made after data has been repeatedly transmitted. If the optical fiber is left disconnected, there is a risk of effluence of important data from the disconnected portion of the fiber. Supposing ordinary consumers to use the network, it is desirable to provide a function for informing the user of a malfunction in a simple manner. Also, it is proper in terms of laser safety that the transmitted light should be shut off simultaneously.

Several ideas have been proposed as described above. However, they presuppose detection of disconnection of one optical fiber with another or other optical fibers, and some of them require a repeater. If a repeater is employed in an optical fiber network such as a home network or an office LAN, the cost of the network is increased.

SUMMARY OF THE INVENTION

An object of the present invention is to provide an optical transmitter-receiver and a method of checking the connection of an optical fiber to the optical transmitter-receiver which are free from the above-described problems, and in which checking of the connection of the optical fiber (ascertainment of disconnection) can be performed reliably irrespective of the existence/non-existence of a first optical signal or a second optical signal provided as data.

To achieve the above-described object, according to one aspect of the present invention, there is provided an optical transmitter-receiver which is connected to an optical fiber provided as a communication line in an optical communication circuit, and which is for inputting to the optical fiber a first optical signal to be transmitted, and for receiving an incoming second optical signal via the optical fiber, the optical transmitter-receiver comprising a transmitting section for inputting the first optical signal and a first connection check signal to the optical fiber, a receiving section for receiving the incoming second optical signal and an incoming second connection check signal via the optical fiber, and a connection monitoring section for inhibiting inputting of the first optical signal and the first connection check signal to the optical fiber if the connection of the optical fiber is not confirmed from the state of receiving of the second connection check signal in the receiving section.

According to another aspect of the present invention, there is also provided a method of checking an optical fiber connection to an optical transmitter-receiver which is connected to an optical fiber provided as a communication line in an optical communication circuit, and which is for inputting to the optical fiber a first optical signal to be transmitted, and for receiving an incoming second optical signal via the optical fiber, wherein, when a transmitting section inputs the first optical signal and a first connection check signal to the optical fiber, and when a receiving section receives the incoming second optical signal and an incoming second connection check signal via the optical fiber, a connection monitoring section inhibits inputting of the first optical signal and the first connection check signal to the optical fiber if the connection of the optical fiber is not confirmed from the state of receiving of the second connection check signal in the receiving section.

According to the present invention, when the optical transmitter-receiver connected to the communication line optical fiber in an optical communication circuit inputs the first optical signal to the optical fiber and receives the incoming second optical signal via the optical fiber, the transmitting section inputs the first optical signal and the first connection check signal to the optical fiber, and the receiving section receives the incoming second optical signal and second connection check signal via the optical fiber.

The connection monitoring section inhibits inputting of the first optical signal and the first connection check signal to the optical fiber if the connection of the optical fiber is not confirmed from the state of receiving of the second connection check signal in the receiving section.

Thus, if it is not certain that the optical fiber is correctly connected, inputting of the first optical signal and the first connection check signal to the optical fiber is inhibited. That is, because the state of connection of the optical fiber can be reliably monitored by the connection monitoring section, it is possible to grasp the state of disconnection of the optical fiber and to reliably inform a user of the disconnected state of the optical fiber.

According to the present invention, it is preferable that the wavelengths of the first optical signal and the first connection check signal are different from each other, and that the wavelengths of the second optical signal and the second connection check signal are also different from each other. If so, the optical signals and the connection check signals can be distinctively discriminated from each other.

According to the present invention, it is preferable that the first connection check signal is superimposed on the first optical signal, and that the second connection check signal is superimposed on the second optical signal. If the signals are formed in this manner, the first connection check signal can be transmitted simultaneously with transmission of the first optical signal. Also, the second connection check signal can be received simultaneously with reception of the second optical signal.

According to the present invention, it is preferable that the first optical signal, the first connection check signal, the second optical signal, and the second connection check signal are transmitted via one optical fiber.

According to the present invention, it is preferable that the first optical signal and the first connection check signal, and the second optical signal and the second connection check signal are transmitted via different optical fibers.

According to the present invention, it is preferable that, if the received level of the received second connection check signal is lower than a predetermined level, inputting of the first optical signal and the first connection check signal to the optical fiber is inhibited.

In this manner, inhibition of inputting of the first optical signal and the first connection check signal to the optical fiber may be made as a preventive measure in a case where the state of connection of the optical fiber cannot be confirmed sufficiently reliably.

According to the present invention, it is preferable that, during the operation of the optical communication circuit, the first optical signal and the first connection check signal are transmitted and the second optical signal and the second connection check signal are received.

In this case, the state of connection of the optical fiber can always be monitored by using the first connection check signal and the second connection check signal as long as the optical communication circuit is operating.

According to the present invention, it is preferable that each of the first connection check signal and the second connection check signal is formed as a recurring pulse signal to reduce the necessary energy for connection checking.

According to the present invention, it is preferable that the state of connection of the optical fiber is checked by receiving the second connection check signal before a start of transmission of the first optical signal. If disconnection of the optical fiber is thereby detected, transmission of the first optical signal can be stopped.

According to the present invention, it is preferable that, when the optical transmitter-receiver is receiving the second optical signal from an optical transmitter-receiver at the other end of the communication line, it sends the first connection check signal to the optical transmitter-receiver at the other end to inform the same of the state of connection of the optical fiber, thus enabling the optical transmitter-receiver at the other end to recognize the state of connection of the optical fiber.

According to the present invention, it is preferable that, when incoming of the second optical signal to be received is stopped, the optical transmitter-receiver performs transmission and reception of the first connection check signal and the second connection check signal in association with an optical transmitter-receiver at the other end of the communication line, thereby grasping the state of checking of the optical fiber connection, or the state of disconnection.

BRIEF DESCRIPTION OF THE DRAWINGS

Fig. 1 is a diagram showing an example of connections of information apparatuses and electric apparatuses in a house to which an optical transmitter-receiver and a method of checking optical fiber connection to the optical transmitter-receiver in accordance with the present invention can be applied;

Fig. 2 is a diagram showing an example of a pair of apparatuses connected by optical transmitter-receivers of the present invention;

Fig. 3 is a diagram showing the configuration of an example of the optical transmitter-receivers shown in Fig. 2;

Fig. 4 is a diagram showing the configuration of the optical transmitter-receivers in more detail;

Fig. 5 is a diagram showing an example of a procedure for checking the connection of an optical fiber in a case where an optical signal from one of the pair of optical transmitter-receivers is stopped through a certain time period;

Fig. 6 is a diagram showing an example of optical fiber connection checking (disconnection monitoring) in the optical transmitter-receivers;

Fig. 7 is a diagram showing an example of the relationship between the duty factor and the maximum peak light quantity in the case where each of a first connection check signal (first monitoring signal) and a second connection check signal (second monitoring signal) is a recurring pulse signal;

Fig. 8 is a diagram showing a state where the optical fiber is disconnected in the case where each of the first connection check signal (first monitoring signal) and the second connection check signal (second monitoring signal) is continuous light;

Fig. 9 is a diagram showing a state where the optical fiber is disconnected in the case where each of the first connection check signal (first monitoring signal) and the second connection check signal (second monitoring signal) is a recurring pulse signal;

Fig. 10 is a diagram showing a state where the optical fiber is disconnected in the case where the first connection check signal and the second connection check signal which are continuous light are respectively superimposed on the first optical signal and on the second optical signal;

Fig. 11 is a diagram showing another embodiment of the optical transmitter-receiver of the present invention;

Fig. 12 is a diagram showing details of the configuration of the embodiment shown in Fig. 11;

Fig. 13 is a diagram showing further details of the configuration of the second embodiment shown in Fig. 12;

Fig. 14 is a table showing an example of characteristics of the optical fiber; and

Fig. 15 is a graph showing an example of a transmission spectrum in the optical fiber.

DESCRIPTION OF THE PREFERRED EMBODIMENTS

Preferred embodiments of the present invention will be described below in detail with reference to the accompanying drawings.

Since the embodiments of the invention described below are preferred ones, various technical details thereof are specified in a limitative manner. The scope of the invention, however, is not limited to the embodiments described below unless a limitation of the invention is specifically mentioned in the following description.

An embodiment of the present invention will be described with reference to the drawings.

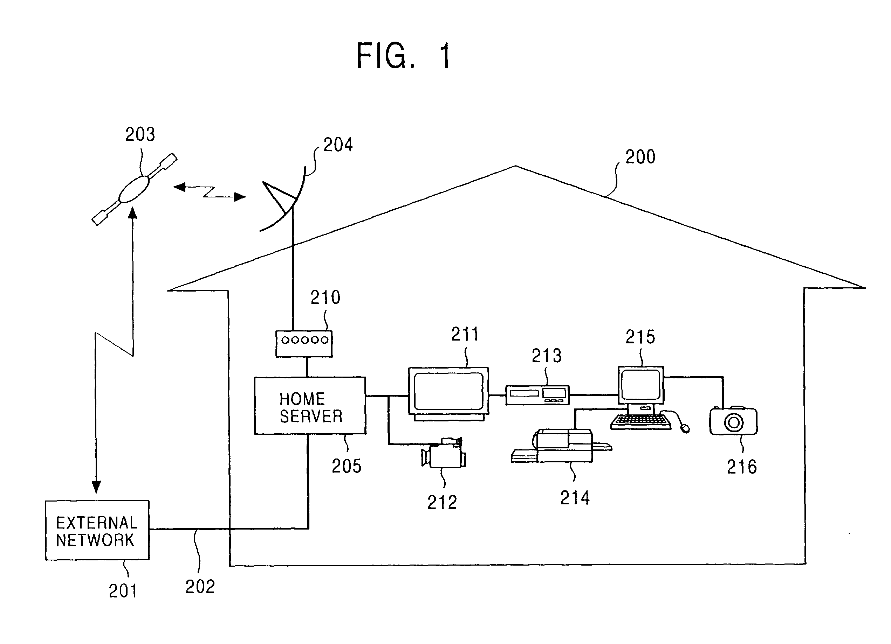

Fig. 1 illustrates a home network, which is an example of an object to which a preferred embodiment of an optical transmitter-receiver of the present invention can be applied.

A house 200 shown in Fig. 1 is provided with a home server 205 and other various apparatuses. The home server 205 is connected to an external network 201 via a communication cable 202, an artificial satellite 203 or the like. In the house 200, electric and information apparatuses or the like are disposed. A home server 205 is provided to store information from the external network 201. Each apparatus in the home is capable of quickly downloading latest information any time by accessing the home server 205. A set-top box 210 is provided to perform data processing of information obtained from artificial satellite 203 via an antenna 204.

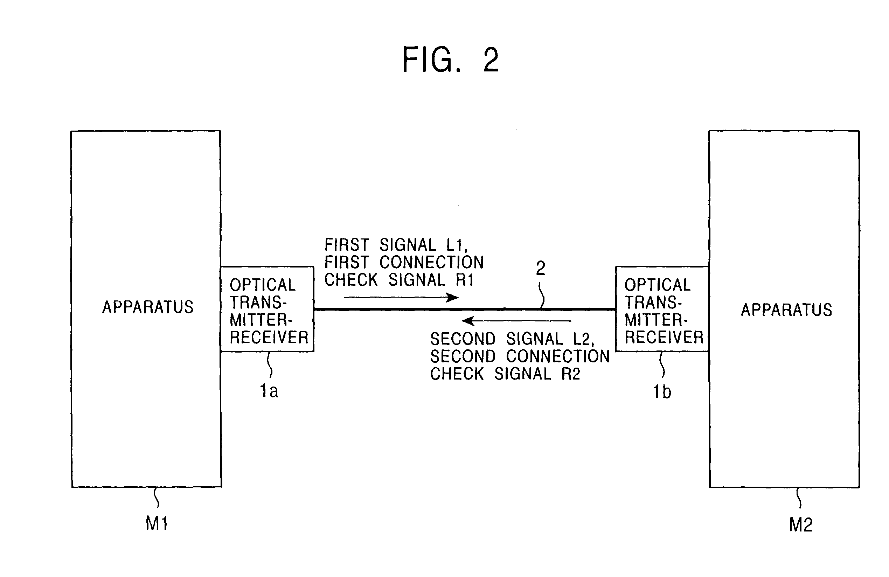

The various apparatuses in the house 200 shown in Fig. 1 are a TV receiver (television receiver) 211, a video camera 212, a video recorder 213, a printer/facsimile machine 214, a computer 215, a digital still camera 216, etc. These apparatuses are connected to each other by optical transmitter-receivers 1a and 1b and optical fibers 2 described below with reference to Fig. 2. They can remote control each other through the thus-formed network.

Fig. 2 illustrates an example of a connection via optical transmitter-receivers 1a and 1b between the home network apparatuses shown in Fig. 1.

The optical transmitter-receivers 1a and 1b are used in a bidirectional optical communication circuit to form a path for transmission of optical signals between apparatuses M1 and apparatus M2. The optical transmitter-receivers 1a and 1b are provided on the apparatuses M1 and M2, respectively. These apparatuses M1 and M2 correspond to some of the electronic and information apparatuses in the house 200 shown in Fig. 1.

For example, when the operation of the optical fiber network shown in Fig. 1 is started, the optical transmitter-receiver 1a shown in Fig. 2 emits and inputs a first optical signal L1 and a first connection check signal (also referred to as a first monitoring light) R1 to the end of the optical fiber 2, and receives a second optical signal L2 and a second connection check signal R2 sent from the optical transmitter-receiver 1b through the optical fiber 2.

The optical transmitter-receiver 1b emits and inputs the second optical signal L2 and the second connection check signal R2 to the end of the optical fiber 2, and receives the first optical signal L1 and the first connection check signal R1 via the optical fiber 2.

It is possible to ascertain the state of connection of the optical fiber 2, i.e., whether the optical fiber 2 is disconnected or snapped at an intermediate point, by using the first connection check signal R1 and the second checking signal R2.

If it is confirmed that there is no problem with the optical fiber 2, each of the optical transmitter-receivers 1a and 1b stops transmitting the connection check signal. Thereafter, the apparatuses M1 and M2 can perform optical communication by transmitting data signals.

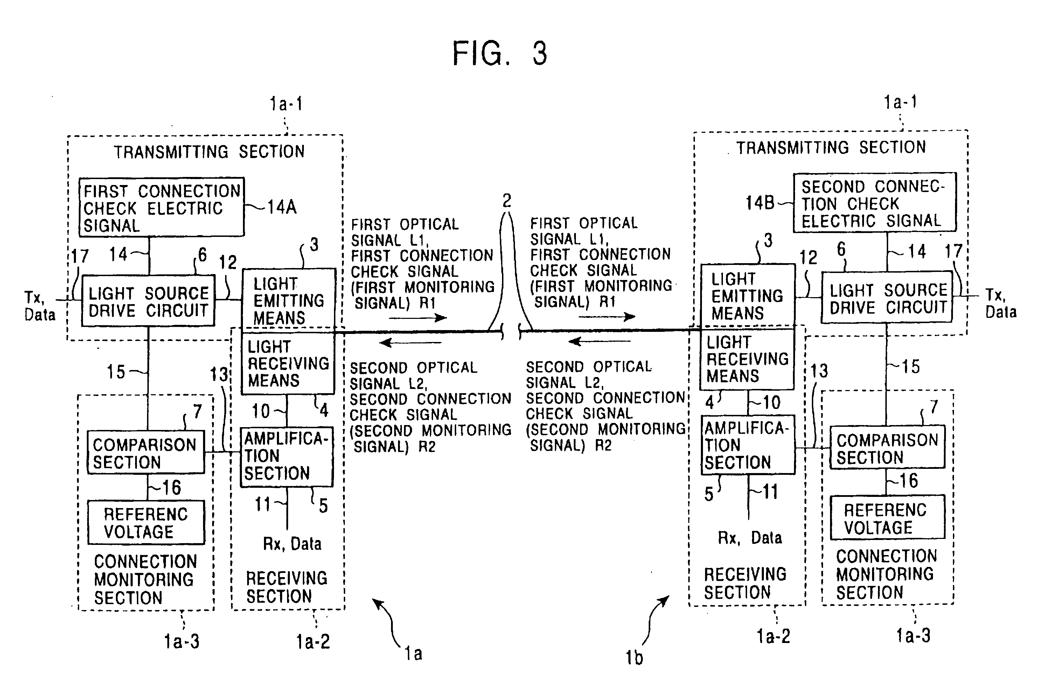

Fig. 3 is a block diagram showing the internal configuration of an example of the optical transmitter-receivers 1a and 1b for recognizing the state of connection of the optical fiber 2 when the operation of the optical fiber network shown in Fig. 1 is started.

The optical transmitter-receivers 1a and 1b are identical to each other in the internal configuration. Each of the optical transmitter-receivers 1a and 1b is formed by a transmitting section 1a-1, a receiving section 1a-2, and a connection monitoring section (disconnection detection section) 1a-3.

The transmitting section 1a-1 is formed by a light emitting means 3 and a light source drive circuit 6. The receiving section 1a-2 is formed by a receiving means 4 and an amplification section 5 for amplifying a received signal. The connection checking section 1a-3 is formed by a comparison section 7 for making an examination as to whether the optical fiber 2 is correctly connected by comparing a connection check signal 13 supplied from the amplification section 5 with a reference voltage 16.

When the operation of the optical fiber network shown in Fig. 1 is started, the first connection check signal R1 is transmitted as described below for the purpose of ascertaining whether the optical fiber 2 is correctly connected or it is disconnected or snapped at an intermediate point. A connection check electric signal 14A modulated as recurring pulse light such as to satisfy a condition in accordance with a laser safety standard is supplied to the light source drive circuit 6 via a signal line 14. The light source drive circuit 6 supplies this connection check signal to the light emitting means 3 via a signal line 12 to convert the electric signal into an optical signal. The light emitting means 3 emits and inputs the first connection check signal R1 to the end of the optical fiber 2.

Simultaneously, in the other optical transmitter-receiver 1b, a second connection check electric signal 14B is supplied to the light source drive circuit 6 via the signal line 14. The light source drive circuit 6 supplies this connection check signal 14B to the light emitting means 3 via the signal line 12 to convert the electric signal into an optical signal. The light emitting means 3 inputs and emits the second connection check signal R2 to the end of the optical fiber 2. The optical transmitter-receiver 1a receives the second connection check signal R2 by the light receiving means 4, and supplies the second connection check signal R2 to the amplification section 5 via a signal line 10. The second connection check signal R2 amplified by the amplification section 5 is supplied to the comparison section 7 via a signal line 13.

In the comparison section 7, a comparison is made between the amplified second connection check signal R2 and the reference voltage 16 to ascertain whether or not the optical fiber 2 is disconnected.

If the optical transmitter-receiver 1a does not receive second connection check signal R2 from the other optical transmitter-receiver 1b even after a certain time period t1 from the moment at which it transmitted first connection check signal R1, the comparison section 7 recognizes the existence of a fault, such as disconnection, with the optical fiber 2, and does not supply via a signal line 15 a signal to the light source drive circuit 6 for permission to transmit the first optical signal. Accordingly, the light emitting means 3 does not emit and input the first optical signal L1 to the optical fiber 2.

If the optical transmitter-receiver 1a receives second connection check signal R2 from the other optical transmitter-receiver 1b in time period t1 after the moment at which it transmitted first connection check signal R1, the comparison section 7 recognizes the fault-free state of the optical fiber 2 and supplies via the signal line 15 a signal to the light source drive circuit 6 to permit the same to transmit the first optical signal. The light source drive circuit 6 given transmission permission receives, via a signal line 17, data "Tx. Data", which is data to be transmitted, and supplies a transmission signal to the light emitting means 3 via the signal line 12. The light emitting means 3 thereby emits and inputs first optical signal L1 to the optical fiber 2.

On the other hand, the receiving means 4 receives second optical signal L2 sent from the other optical transmitter-receiver 1b. Second optical signal L2 is converted from light into an electric signal by the light receiving means 4. The electric signal is input to the amplification section 5 via the signal line 10 to be amplified. The amplified signal is obtained as received data "Rx, Data" via a signal line 11 and is supplied to a subsequent section.

At the time of reception of light, second connection check signal R2 and second optical signal L2 can easily be discriminated from each other because second optical signal L2 includes a head signal.

In the above-described arrangement, the optical transmitter-receiver 1a first sends first connection check signal R1 to the second optical transmitter-receiver 1b, ascertains whether the second connection check signal is correctly returned from the second optical transmitter-receiver 1b to the first optical transmitter-receiver 1a, and sends the first optical signal to the second optical transmitter-receiver 1b through the optical fiber 2 if no fault is recognized with the optical fiber 2. The second optical transmitter-receiver 1b also sends second optical signal L2 to the first optical transmitter-receiver 1a by following the same procedure.

An example of an optical system for leading and inputting the optical signal and the connection check signal to the same optical fiber will next be described.

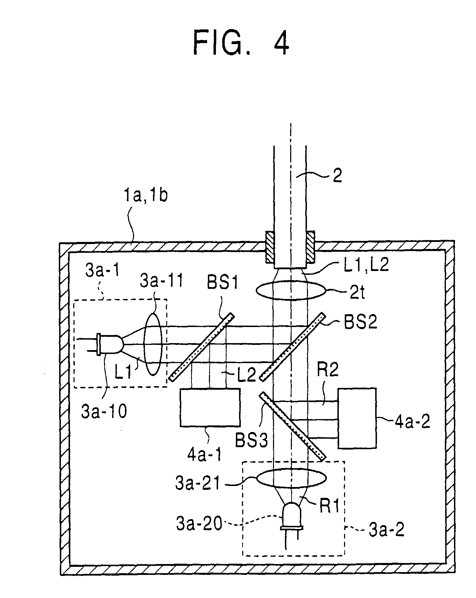

Fig. 4 shows an example of an optical system of the light emitting means 3 and the receiving means 4 of the optical transmitter-receivers 1a and 1b shown in Fig. 3. Since the optical transmitter-receivers 1a and 1b have the same optical system, the optical transmitter-receiver 1a will be described as an representative.

In the optical transmitter-receiver 1a (1b), light emitting means 3a comprises two light emission sources 3a-1 and 3a-2 while light receiving means 4a comprises two light receiving devices 4a-1 and 4a-2. The light emission source 3a-1 for transmitting first optical signal L1 having a wavelength $\lambda 1$ is formed by a light emitting unit 3a-10 and a lens 3a-11.

The light emission source 3a-2 for transmitting first connection check signal R1 having a wavelength $\lambda 2$ is formed by a light emitting unit 3a-20 and a lens 3a-21.

The two light receiving means 4a are formed by the light receiving device 4a-1 for receiving second optical signal L2 having a wavelength $\lambda 3$ and the light receiving device 4a-2 for receiving second connection check signal L2 having a wavelength $\lambda 4$.

The wavelengths $\lambda 1$, $\lambda 2$, $\lambda 3$, and $\lambda 4$ satisfy the following inequalities:

$$\lambda 1 \neq \lambda 2$$
$$\lambda 3 \neq \lambda 4$$

Partial transmission mirrors BS1 and BS3 are elements for separating optical paths for transmitted light and received light. A wavelength filter BS2 is an element for separating light of wavelength $\lambda 1$ and light of wavelength $\lambda 2$ from each other and simultaneously separating light of wavelength $\lambda 3$ and light of wavelength $\lambda 4$ from each other.

Transmission and reception of the optical signals in the arrangement shown in Fig. 4 will be described. First optical signal L1 of wavelength $\lambda 1$ emitted from the light emitting unit 3a-10 passes through the lens (condenser element) 3a-11 and through the partial transmission mirror BS1, is reflected by the wavelength filter BS2, and is condensed by a lens 2t to be incident upon the end of the optical fiber 2. On the other hand, second optical signal L2 of wavelength

$\lambda 3$ emergent from the end of the optical fiber 2 passes through the lens 2t and is reflected by the wavelength filter BS2 and the partial transmission mirror BS1 to be incident upon the light receiving device 4a-1.

Transmission and reception of the connection check signals (monitoring light) are performed as described below. First connection check signal R1 of wavelength $\lambda 2$ emitted from the light emitting unit 3a-20 passes through the lens 3a-21, the partial transmission mirror BS3 and the wavelength filter BS2 and is condensed by the lens 2t to be incident upon the end of the optical fiber 2. On the other hand, second connection check signal R2 of wavelength $\lambda 4$ emergent from the end of the optical fiber 2 passes through the lens 2t and the wavelength filter BS2 and is reflected by the partial transmission mirror BS3 to be incident upon the light receiving device 4a-2.

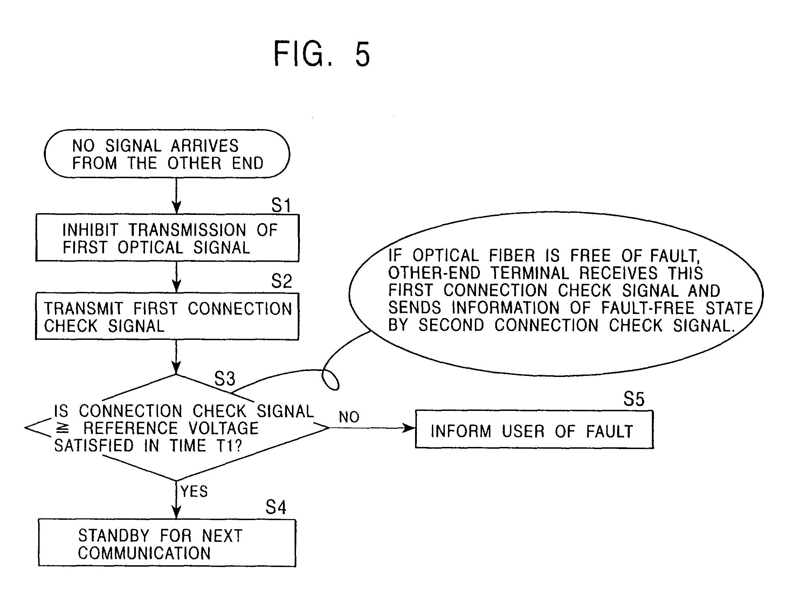

The operation in accordance with an optical fiber connection checking method will now be described in detail. Fig. 5 is a flowchart for explaining an example of the optical fiber connection checking method. The operation of the optical transmitter-receiver 1a will be described with reference to this flowchart, and the same description is also applicable to the operation of the optical transmitter-receiver 1b, which is the same as that of the optical transmitter-receiver 1a.

The embodiment of the present invention is also effective in checking the state of connection of the optical fiber 2 even in a case where transmission of the optical signal from the other terminal is stopped and is not restarted through a certain time period. The following two reasons for stoppage of incoming of the optical signal are adduced.

(1) There is no transmitted data (Tx. Data) shown in Fig. 3.
(2) There is a fault, such as disconnection, with the optical fiber 2.

In this event, the optical transmitter-receiver 1a shown in Fig. 3 does not transmit first optical signal L1 (step S1). Next, the first optical transmitter-receiver 1a transmits first connection check signal R1 to the second optical transmitter-receiver 1b (step S2). If the optical fiber 2 is free of any fault, the first optical transmitter-receiver 1b transmits second connection check signal R2 in response to this first connection check signal R1, and the first optical transmitter-receiver 1a receives this second connection check signal R2 (step S3).

If the optical fiber 2 is free of any fault, the first optical transmitter-receiver 1a receives second connection check signal R2 within certain time period t1. If second connection check signal R2 amplified by the amplification section 5 satisfies

$$\text{Connection Check Signal Voltage} \geq \text{Reference Voltage} \tag{1}$$

in the receiving section 1a-2, the first optical transmitter-receiver 1a stands by for the next communication (step S4).

If the first optical transmitter-receiver 1a does not receive second connection check signal R2 from the second optical transmitter-receiver 1b within time period t1 (step S3), the first optical transmitter-receiver 1a recognizes that there is a problem with the optical fiber 2 and therefore informs a user of the existence of a fault (step S5).

This operation of checking the connection of the optical fiber 2 may be repeatedly performed at certain time intervals.

When checking of the connection of the optical fiber 2 (confirmation of the state of not being disconnected) is completed as described above, the first optical transmitter-receiver 1a and the second optical transmitter-receiver 1b shown in Fig. 3 perform optical communication as described below. The light source drive circuit 6 of the first optical transmitter-receiver 1a receives, via the signal line 17, data "Tx. Data", which is data to be transmitted, and supplies the transmission signal to the light emitting means 3 via the signal line 12. The light emitting means 3 emits first optical signal L1 so that the signal light is incident upon the end of the optical fiber 2.

The light receiving means 4 receives second optical signal L2 sent from the optical transmitter-receiver 1b at the other end. The light receiving means 4 converts second optical signal L2 from light into an electric signal, which is input to the amplification section 5 via the signal line 10 to be amplified. The amplified signal is obtained as received data "Rx. Data" via the signal line 11.

Another example of the operation of the first and second optical transmitter-receivers 1a and 1b will next be described.

To ascertain whether the optical fiber 2 is suitably connected while the first optical transmitter-receiver 1a and the second optical transmitter-receiver 1b are performing optical communication, connection check signals R1 and R2 may be transmitted together with first and second optical signals L1 and L2 as described below.

Connection check signal R1 is transmitted to the light source drive circuit 6 via the signal line 14. The light source drive circuit 6 transmits this connection check signal R1 to the light emitting means 3 via the signal line 12 to covert the electric signal into an optical signal. The light emitting means 3 emits and inputs to the optical fiber 2 first connection check signal R1 having a wavelength different from that of first optical signal L1. That is, first connection check signal R1 is emitted and input to the optical fiber 2 by being superimposed on first optical signal L1.

Simultaneously, the second optical transmitter-receiver 1b at the other end transmits second connection check signal R2. The first optical transmitter-receiver 1a receives this second connection check signal R2 by the light receiving means 4, and supplies the second connection check signal R2 to the amplification section 5 via the signal line 10. The second connection check signal R2 amplified by the amplification section 5 is supplied to the comparison section 7 via the signal line 13.

The comparison section 7 monitors the state of connection of the optical fiber 2 by comparing the amplified second connection check signal R2 with the reference voltage. Even if optical signal L2 is not sent from the second optical transmitter-receiver 1b to the first optical transmitter-receiver 1a, the fault-free state of the optical fiber 2 can be recognized as long as the connection check signal voltage is higher than the reference voltage.

If incoming of second connection check signal R2 received by the first optical transmitter-receiver 1a from the second optical transmitter-receiver 1b at the other end is stopped, the comparison section 7 recognizes occurrence of a fault with the optical fiber 2 and gives a command to the light source drive circuit 6 via the signal line 15 to inhibit transmission of the optical signal. Then the light source drive circuit 6 immediately stops transmitting first optical signal L1 and first connection check signal R1.

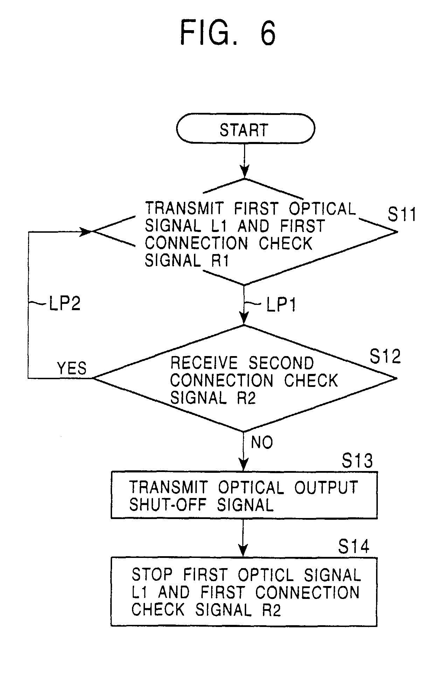

Fig. 6 shows the operation in accordance with the optical fiber connection checking method in this case. Fig. 6 is a flowchart for explaining the flow of the optical fiber connection checking method. The operation of the optical transmitter-receiver 1a will be described with reference to this flowchart, and the same description is also applicable to the operation of the optical transmitter-receiver 1b, which is the same as that of the optical transmitter-receiver 1a.

When the operation of the optical fiber network is started, the transmitting section 1a-1 shown in Fig. 3 transmits first optical signal L1 and first connection check signal R1 (step S11). The second optical transmitter-receiver 1b at the other end also transmits second optical signal L2 and second connection check signal R2. If the optical fiber 2 is free of any fault, second connection check signal R2 is received in certain time period t1. Second connection check signal R2 amplified by the amplification section 5 satisfies

$$\text{Connection Check Signal Voltage} \geq \text{Reference Voltage} \tag{1}$$

(step S12), so that the comparison section 7 stays in the state of permitting the light source drive circuit 6 to transmit first optical signal L1 (in loop LP1-LP2).

When the second connection check signal R2 amplified by the amplification section 5 changes so as not to satisfy the equation (1), the comparison section 7 recognizes the existence of a fault with the optical fiber 2 and gives a command to the light source drive circuit 6 to inhibit transmission of the optical signal (step S13). Receiving the command to inhibit transmission of first optical signal L1, the light source drive circuit 6 stops transmitting first optical signal L1 and first connection check signal R1 by stopping the drive signal to the light emitting means 3 (step S4).

As described above, if the embodiment of the present invention is put to use, it is possible to detect disconnection of the optical fiber 2 and to stop transmission of the optical signal irrespective of whether or not the first optical signal exists as data.

As the light emitting unit of the light emitting means 3, a laser light source, e.g., a semiconductor laser may be used. A condition for use of the connection check signal in accordance with a laser safety standard with respect laser light emitted from the light emitting means will be described. Products which use laser devices or light emitting diodes (LEDs) and which are essentially safe are grouped in a "Class 1" by a safety standard. For example, CD (compact disc: trademark of an optical disc) players are in "Class 1". In the case of use of a home network or the like for ordinary users having no knowledge about laser safety, it is desirable to set a condition corresponding to "Class 1".

For example, in accordance with IEC825, which is an international laser safety standard, the maximum permissible quantity of light from a Class-1 optical transmitter-receiver is only 0.22 mW with respect to non-modulated continuous light of a light source wavelength of 650 nm. However, if an optical transmitter-receiver emits laser light in the form of recurring pulses, the maximum permissible light quantity can be increased in comparison with laser light continuously emitted. This is because the influence of recurring pulse light on a human being is smaller than that of continuous light.

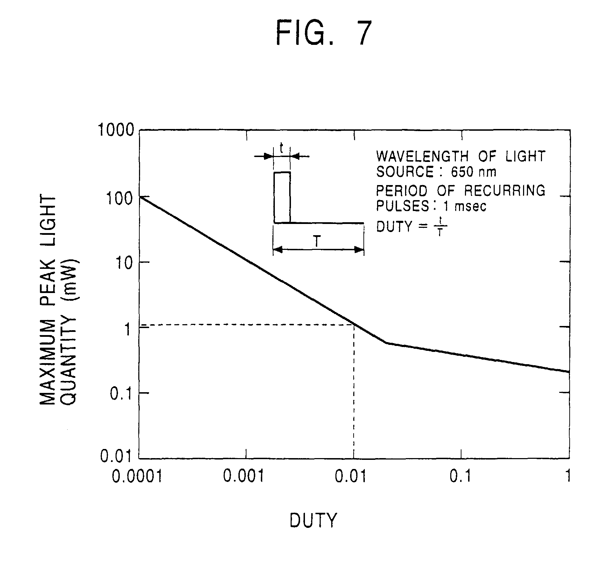

Fig. 7 is a graph showing an example of the maximum permissible quantity of light from an optical transmitter-receiver in the "Class 1" in accordance with the laser safety international standard IEC825. The wavelength of the optical transmitter-receiver is 650 nm, and the period of recurring single-pulse light is 1 millisecond. It can be understood from this graph that, if the duty factor of pulse light is 0.01 or less, a maximum peak quantity of pulse light exceeding 1 mW can be emitted. In comparison with the maximum output of 0.22 mW in the case of continuous light, the quantity of light permitted to emit can be increased five times. This increased quantity of light can be sensed even by an optical transmitter-receiver having low light receiving sensitivity.

An example of a recurring single-pulse signal has been described. If recurring pulses have a constant recurring period, such a recurring pulse signal can be used with a PLL (phase locked loop). Needless to say, the maximum peak value of a recurring signal having different pulses can also be increased.

Consequently, such recurring pulse light may be continuously transmitted for a certain time period t2 to enable the above-described checking of the state of connection of the optical fiber.

The advantage of use of the present invention for checking the state of connection of the fiber at the time of a start the optical fiber network has been explained. According to the present invention, however, the state of connection of the optical fiber can also be checked in the optical fiber network in the operating state.

Checking under this condition will be described with reference to Fig. 2. For example, in a half-duplex transmission mode, the first optical transmitter-receiver 1a continues transmitting first connection check signal R1 while receiving second optical signal L2 from the second optical transmitter-receiver 1b at the other end. The second optical transmitter-receiver 1b can recognize the fault-free state of the optical fiber 2 as long as it receives this connection check signal R1. That is, the second optical transmitter-receiver 1b can continue safely sending second optical signal L2 to the first optical transmitter-receiver 1a. The half duplex mode is a transmission mode in which a signal is transmitted only in one direction at a time point, as are vehicles in reciprocal traffic on one lane.

If incoming of the optical signal is stopped in this case, it is necessary to ascertain whether (1) there is no data to be transmitted or (2) there is a fault with the optical fiber 2 at an intermediate point.

Then, the first optical transmitter-receiver 1a sends first connection check signal R1 to the second optical transmitter-receiver 1b. Receiving the signal R1, the second optical transmitter-receiver 1b sends back second connection check signal R2 to the first optical transmitter-receiver 1a, thereby enabling confirmation of the fault-free state of the optical fiber 2. If the second connection check signal R2 is not transmitted and received, it is recognized that there is a fault with the optical fiber 2 and the first optical transmitter-receiver 1a is not permitted to send first optical signal L1.

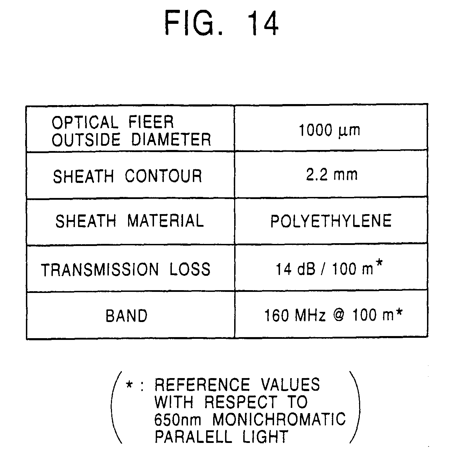

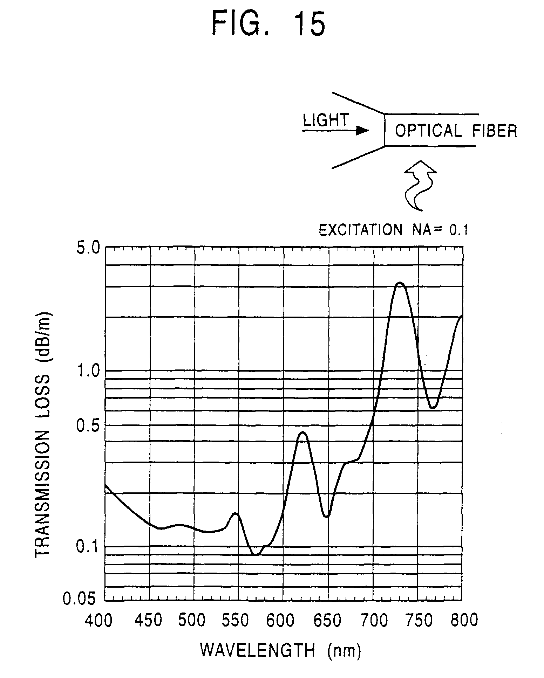

An example of the characteristics of the optical fiber will be described with reference to Figs. 14 and 15.

Fig. 14 shows an example of the characteristics of the optical fiber 2. The outside diameter of the optical fiber is, for example, 1000 μm, and the outside diameter of the sheath is 2.2 mm. The material of the sheath is polyethylene. The optical fiber is formed of a core and a cladding with which the core is covered. The circumferential surface of the cladding is covered with a jacket made of the above-mentioned sheath material, i.e., polyethylene or the like. If light from the laser light source is monochromatic parallel light having a wavelength of 650 nm, the transmission loss in the optical fiber 2 is, for example, 14 dB/100m in a band of 160 MHz.

Fig. 15 shows an example of a loss spectrum of the optical fiber. In Fig. 15, "EXCITATION NA = 0.1" denotes that the first or second optical signal is emitted to the end surface of the optical fiber with a numerical aperture NA = 0.1.

Referring to Fig. 15, the transmission loss is limited to comparatively small values at wavelengths of 450 to 600 nm and at a wavelength of 650 nm. Therefore, the present invention can be realized by setting the wavelengths $\lambda1$ and $\lambda3$ of optical signals L1 and L2 in the 650 nm band and the wavelengths $\lambda2$ and $\lambda4$ of connection check signals R1 and R2 in the 460 nm band, for example. Light sources having these wavelengths have already been put to practical use and can easily be obtained. In this case, the transmission loss can be limited to a comparatively small value at a wavelength of 650 nm, for example.

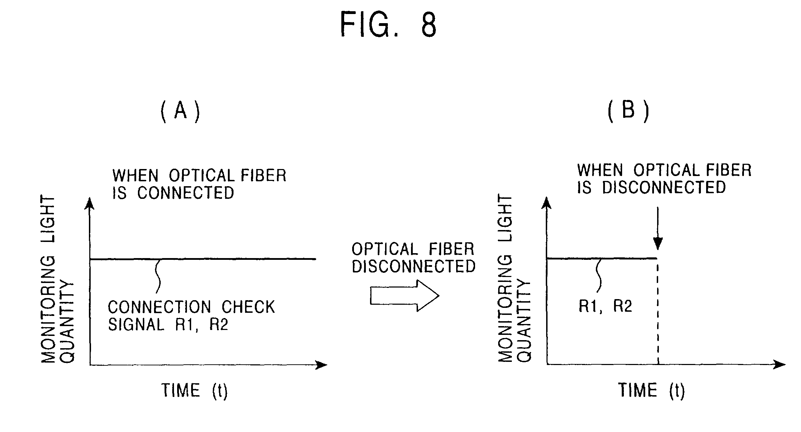

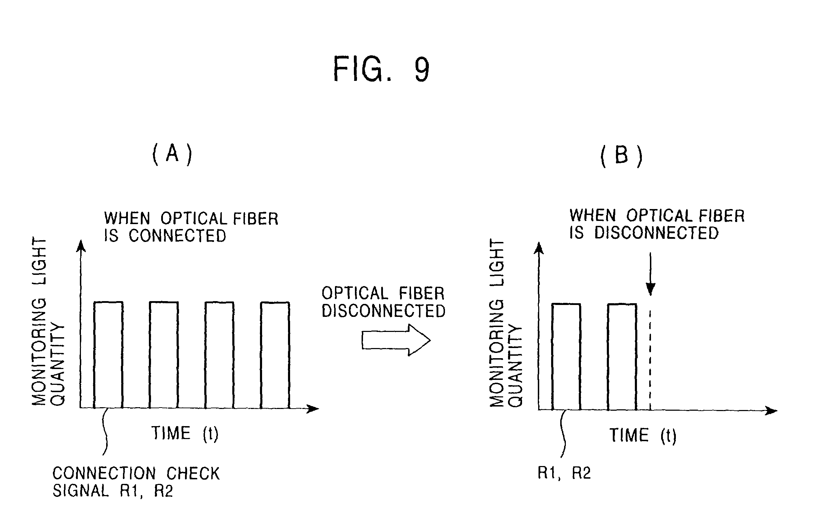

The waveforms of connection check signals R1 and R2 will next be described. Since connection check signals R1 and R2 are used for the purpose of detecting disconnection of the optical fiber 2, it is desirable that connection check signal R1 and R2 have such a waveform that disconnection can be detected as fast as possible. For example, connection check signals R1 and R2 may be received at a constant output level, as shown in Fig. 8. When incoming of the signal R1 or R2 is stopped, occurrence of disconnection can be recognized. However, this method is considered to necessitate high power consumption because of the need to constantly transmit connection check signals R1 and R2. In contrast, the method of transmitting connection check signals R1 and R2 as recurring pulse signals as shown in Fig. 9 enables detection of disconnection of the optical fiber 2 while achieving low power consumption and a long life of the optical transmitter-receiver.

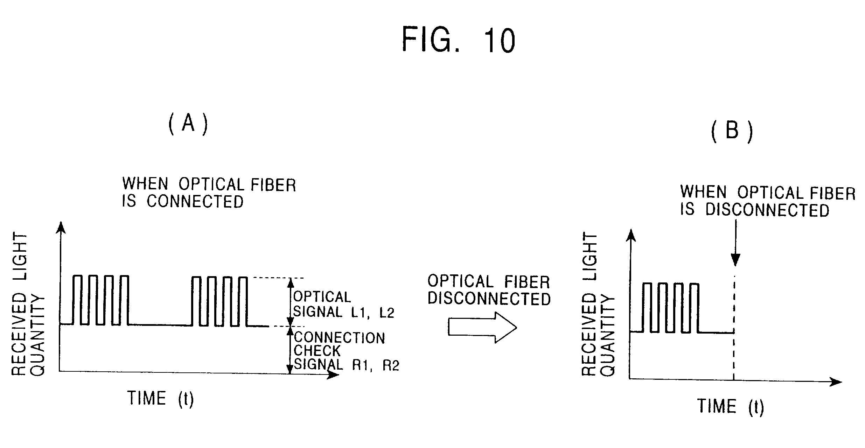

In the case of transmitting constant-output connection check signals R1 and R2 as shown in Fig. 8, the connection check signals R1 and R2 may be formed by setting the same wavelength as that of the optical signal. It is also possible to detect disconnection of the optical fiber by using the thus-formed connection check signals R1 and R2. Fig. 10 shows the state of received optical signals L1 and L2 and connection check signals R1 and R2 in such a case. Optical signals L1 and L2 in the form of recurring pulses are received in a state of being respectively superimposed on connection check signals R1 and R2 received at a constant output level. If the optical fiber 2 is disconnected, the connection check signal is not received. Therefore, disconnection of the optical fiber 2 can be detected irrespective of the existence/non-existence of the optical signal. The optical signal and the connection check signal can be separated from each other at the time of reception by removing only the connection check signal level. If this disconnection detection method is used, there is no need for a wavelength multiplexing optical system such as that shown in Fig. 4.

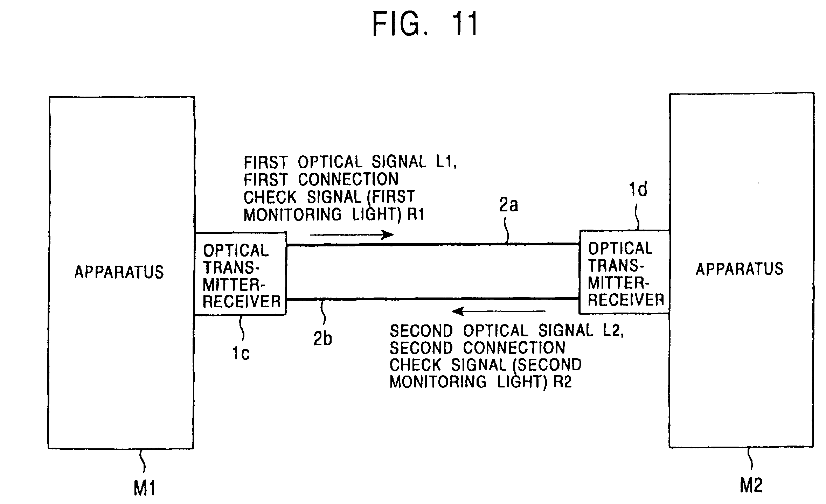

The present invention can be applied not only to single-core bidirectional optical communication but also to dual-core optical fiber communication such as shown in Figs. 11 to 13.

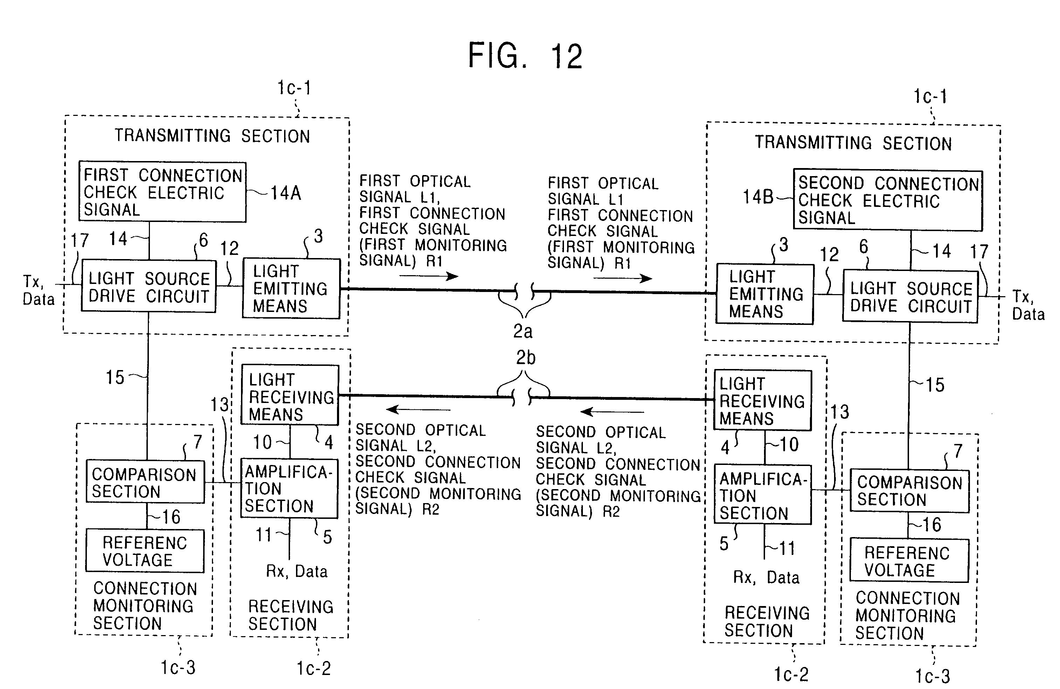

Fig. 11 shows an example of an application to dual-core bidirectional optical fiber communication. Two optical fibers 2a and 2b are connected to a first optical transmitter-receiver 1c and to a second optical transmitter-receiver 1d. Fig. 12 is a block diagram of the internal configuration of the first optical transmitter-receiver 1c. The second optical transmitter-receiver 1d also has the same internal configuration. Each of the first optical transmitter-receiver 1c and the second optical transmitter-receiver 1d has a transmitting section 1c-1, a receiving section 1c-2, and a connection monitoring section 1c-3. The configuration and operation of these sections are the same as those of the transmitting section 1a-1, the receiving section 1a-2, and the connection monitoring section 1a-3 of the embodiment shown in Fig. 3, and need no description other than the description already made.

In comparison with the single-core bidirectional communication shown in Fig. 3, light emitting means 3 and light receiving means 4 are separated from each other and independently connected to the optical fiber 2a and to the optical fiber 2b, respectively. Also in this case, the same processing as that described above with respect to the embodiment shown in Fig. 3 is performed to detect disconnection of the optical fibers 2.

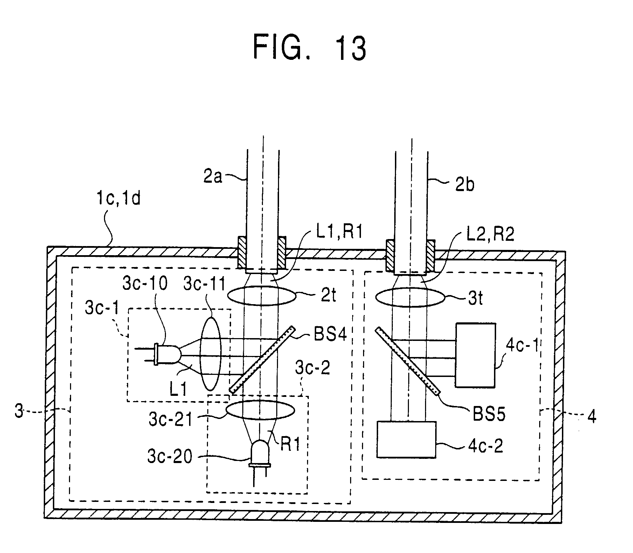

Fig. 13 is an example of an optical system of the optical transmitter-receiver 1c for dual-core bidirectional optical communication. The optical system of the optical transmitter-receiver 1c is formed by light emitting means 3 and light receiving means 4. The light emitting means 3 is formed by a light emission source 3c-1 for transmitting first optical signal L1 having a wavelength $\lambda 1$, and a light emission source 3c-2 for transmitting first connection check signal R1 having a wavelength $\lambda 2$.

The light emission source 3c-1 has a light emitting unit 3c-10, and a lens 3c-11, and the light emission source 3c-2 has a light emitting unit 3c-20, and a lens 3c-21. The light receiving means 4 is formed by a light receiving device 4c-1 for receiving second optical signal L2 having a wavelength $\lambda 3$, and a light receiving device 4c-2 for receiving second connection check signal R2 having a wavelength $\lambda 4$.

A wavelength filter BS4 reflects light of wavelength $\lambda 1$ corresponding to the wavelength of first optical light L1, and allows light of wavelength $\lambda 2$ corresponding to the wavelength of first connection check signal R1 to pass therethrough. Therefore, first optical signal L1 of wavelength $\lambda 1$ emitted from the light emitting unit 3c-10 passes through the lens 3c-11, is reflected by the wavelength filter BS4, and is condensed by a lens 2t to be incident upon the optical fiber 2a.

First connection check signal R1 of wavelength $\lambda 2$ is emitted from the light emitting unit 3c-20, passes through the lens 3c-21 and the wavelength filter BS4, and is condensed by the lens 2t to be incident upon the optical fiber 2a.

A wavelength filter BS5 reflects light of wavelength $\lambda 3$ corresponding to the wavelength of second optical light L2, and allows light of wavelength $\lambda 4$ corresponding to the wavelength of second connection check signal R2 to pass therethrough. Therefore, light received from the optical fiber 2 passes through a lens 3t and is separated into second optical signal L2 and second connection check signal R2 by the wavelength filter BS5. The second optical signal of wavelength $\lambda 3$ is reflected by the wavelength filter BS5 to be incident upon the light receiving device 4c-1. Second connection check signal R2 of wavelength $\lambda 4$ passes through the wavelength filter BS5 to be incident upon the light receiving device 4c-2.

The present invention is not limited to the above-described embodiments.

The embodiments have been described as an example of an application to a local area network (LAN) in a house, i.e., a home network, or an office LAN. However, the present invention can also be applied to other communication systems or the like, e.g., a system for exchanging various sorts of information in a traveling means such as a motor vehicle or an airplane.

The present invention has the following advantages based on transmitting signals for detecting disconnection.

(1) The present invention makes it possible to check the connection of an optical fiber, i.e., to ascertain a disconnected or correctly connected condition, irrespective of the existence/non-existence of an optical signal provided as data.
(2) In contrast with the conventional art, the present invention makes it possible to detect disconnection of an optical fiber even if there is only one optical fiber.
(3) In contrast with the conventional art, the present invention makes it possible to detect disconnection of an optical fiber without using a repeater.

According to the present invention, the wavelength of the light source is not limited to particular wavelengths, and the system is not necessarily be arranged in accordance with particular laser safety standards. Needless to say, the current safety standards may be changed in future and the optimal safety performance in accordance with any updated standard can be achieved based on the concept of the present invention.

According to the present invention, it is possible to check the state of connection of an optical fiber without any damage to the human body.

According to the present invention, as described above, checking of the connection (ascertainment of disconnection) can be reliably performed irrespective of the existence/non-existence of first and second optical signals provided as data.

**Claims**

1. An optical transmitter-receiver (1a, 1b, 1c) which is connected to an optical fiber (2) provided as a communication line in an optical communication circuit, and which is for inputting to the optical fiber a first optical signal to be transmitted, and for receiving an incoming second optical signal via the optical fiber, said optical transmitter-receiver (1a, 1b, 1c) comprising:

   a transmitting section (1a - 1, 1c - 1) for inputting the first optical signal and a first connection check signal to the optical fiber;
   a receiving section (1a - 2, 1c - 2) for receiving the incoming second optical signal and an incoming second connection check signal via the optical fiber; and
   a connection monitoring section (1a - 3, 1c - 3) for inhibiting inputting of the first optical signal and the first connection check signal to the optical fiber (2) if the connection of the optical fiber is not confirmed from the state of receiving of the second connection check signal in said receiving section.

2. An optical transmitter-receiver (1a, 1b, 1c) according to Claim 1, wherein the wavelengths of the first optical signal and the first connection check signal are different from each other and the wavelengths of the second optical signal and the second connection check signal are also different from each other.

3. An optical transmitter-receiver (1a, 1b, 1c) according to Claim 1, wherein the first connection check signal is superimposed on the first optical signal while the second connection check signal is superimposed on the second optical signal.

4. An optical transmitter-receiver (1a, 1b, 1c) according to Claim 1, wherein the first optical signal, the first connection check signal, the second optical signal, and the second connection check signal are transmitted via one optical fiber (2).

5. An optical transmitter-receiver (1a, 1b, 1c) according to Claim 1, wherein the first optical signal and the first connection check signal, and the second optical signal and the second connection check signal are transmitted via different optical fibers.

6. An optical transmitter-receiver (1a, 1b, 1c) according to Claim 1, wherein, if the received level of the received second connection check signal is lower than a predetermined level, inputting of the first optical signal and the first connection check signal to the optical fiber (2) is inhibited.

7. An optical transmitter-receiver (1a, 1b, 1c) according to Claim 1, wherein, while the optical communication circuit is operating, the first optical signal and the first connection check signal are transmitted and the second optical signal and the second connection check signal are received.

8. An optical transmitter-receiver (1a, 1b, 1c) according to Claim 1, wherein each of the first connection check signal and the second connection check signal is a recurring pulse signal.

9. An optical transmitter-receiver (1a, 1b, 1c) according to Claim 8, wherein the state of connection of the optical fiber is checked by receiving the second connection check signal before a start of transmission of the first optical signal.

10. An optical transmitter-receiver (1a, 1b, 1c) according to Claim 8, wherein, when the optical transmitter-receiver is receiving the second optical signal transmitted from an optical transmitter-receiver at the other end of the communication line, it sends the first connection check signal to the optical transmitter-receiver at the other end to inform the same of the state of connection of the optical fiber (2).

11. An optical transmitter-receiver (1a, 1b, 1c) according to Claim 8, wherein, when incoming of the second optical signal to be received is stopped, the optical transmitter-receiver performs transmission and reception of the first connection check signal and the second connection check signal in association with an optical transmitter-receiver at the other end of the communication line.

12. A method of checking optical fiber connection to an optical transmitter-receiver which is connected to an optical fiber provided as a communication line in an optical communication circuit, and which is for inputting to the optical fiber a first optical signal to be transmitted, and for receiving an incoming second optical signal via the optical fiber, said method comprising the steps of:

inputting the first optical signal and a first connection check signal to the optical fiber from a transmitting section of the apparatus;

receiving, with a receiving section of the apparatus, the second optical signal and an incoming second connection check signal via the optical fiber;

inhibiting, with a connection monitoring section of the apparatus, inputting of the first optical signal and the first connection check signal to the optical fiber if the connection of the optical fiber is not confirmed from the state of receiving of the second connection check signal in the receiving section when the receiving section receives the second optical signal and the second connection check signal.

## FIG. 1

EP 0 944 184 A2

# FIG. 2

APPARATUS — OPTICAL TRANS-MITTER-RECEIVER (1a) — FIRST SIGNAL L1, FIRST CONNECTION CHECK SIGNAL R1 → — 2 — ← SECOND SIGNAL L2, SECOND CONNECTION CHECK SIGNAL R2 — OPTICAL TRANS-MITTER-RECEIVER (1b) — APPARATUS

M1

M2

EP 0 944 184 A2

# FIG. 3

TRANSMITTING SECTION 1a-1

FIRST CONNECTION CHECK ELECTRIC SIGNAL ~14A

17  14~  6  12

Tx, Data

LIGHT SOURCE DRIVE CIRCUIT

LIGHT EMITTING MEANS 3

LIGHT RECEIVING MEANS

15~  13

7

COMPARISON SECTION

10~  4

AMPLIFICA-TION SECTION

~16

REFERENC VOLTAGE

11~  5

Rx, Data

CONNECTION MONITORING SECTION  1a-3

RECEIVING SECTION  1a-2

1a

FIRST OPTICAL SIGNAL L1, FIRST CONNECTION CHECK SIGNAL (FIRST MONITORING SIGNAL) R1

2

SECOND OPTICAL SIGNAL L2, SECOND CONNECTION CHECK SIGNAL (SECOND MONITORING SIGNAL) R2

FIRST OPTICAL SIGNAL L1, FIRST CONNECTION CHECK SIGNAL (FIRST MONITORING SIGNAL) R1

SECOND OPTICAL SIGNAL L2, SECOND CONNECTION CHECK SIGNAL (SECOND MONITORING SIGNAL) R2

TRANSMITTING SECTION 1a-1

14B~

SECOND CONNEC-TION CHECK ELECTRIC SIGNAL

3

LIGHT EMITTING MEANS

12  6  ~14  17

LIGHT SOURCE DRIVE CIRCUIT

Tx, Data

LIGHT RECEIVING MEANS  13

4  ~10

AMPLIFICA-TION SECTION

~15

7

COMPARISON SECTION

~16

REFERENC VOLTAGE

5  ~11

Rx, Data

RECEIVING SECTION  1a-2

CONNECTION MONITORING SECTION  1a-3

1b

# FIG. 4

# FIG. 5

NO SIGNAL ARRIVES
FROM THE OTHER END

↓ S1

INHIBIT TRANSMISSION OF
FIRST OPTICAL SIGNAL

↓ S2

TRANSMIT FIRST CONNECTION
CHECK SIGNAL

↓ S3

IS CONNECTION CHECK SIGNAL
≧ REFERENCE VOLTAGE
SATISFIED IN TIME T1?

→ NO → INFORM USER OF FAULT    S5

↓ YES

STANDBY FOR NEXT
COMMUNICATION    S4

IF OPTICAL FIBER IS FREE OF FAULT,
OTHER-END TERMINAL RECEIVES THIS
FIRST CONNECTION CHECK SIGNAL AND
SENDS INFORMATION OF FAULT-FREE STATE
BY SECOND CONNECTION CHECK SIGNAL.

EP 0 944 184 A2

# FIG. 6

START

TRANSMIT FIRST OPTICAL
SIGNAL L1 AND FIRST
CONNECTION CHECK
SIGNAL R1                    S11

~LP2

~LP1

YES        RECEIVE SECOND        S12
           CONNECTION CHECK
           SIGNAL R2

NO

TRANSMIT OPTICAL OUTPUT        S13
SHUT-OFF SIGNAL

STOP FIRST OPTICL SIGNAL       S14
L1 AND FIRST CONNECTION
CHECK SIGNAL R2

# FIG. 7

# FIG. 8

( A )

WHEN OPTICAL FIBER
IS CONNECTED

MONITORING LIGHT
QUANTITY

CONNECTION CHECK
SIGNAL R1, R2

TIME (t)

OPTICAL FIBER
DISCONNECTED

( B )

WHEN OPTICAL FIBER
IS DISCONNECTED

MONITORING LIGHT
QUANTITY

R1, R2

TIME (t)

FIG. 9

( A )

WHEN OPTICAL FIBER
IS CONNECTED

MONITORING LIGHT
QUANTITY

CONNECTION CHECK
SIGNAL R1, R2

TIME (t)

OPTICAL FIBER
DISCONNECTED

( B )

WHEN OPTICAL FIBER
IS DISCONNECTED

MONITORING LIGHT
QUANTITY

R1, R2

TIME (t)

21

# FIG. 10

(A)

WHEN OPTICAL FIBER
IS CONNECTED

OPTICAL
SIGNAL L1, L2

CONNECTION
CHECK
SIGNAL R1, R2

RECEIVED LIGHT
QUANTITY

TIME (t)

OPTICAL FIBER
DISCONNECTED

(B)

WHEN OPTICAL FIBER
IS DISCONNECTED

RECEIVED LIGHT
QUANTITY

TIME (t)

# FIG. 11

EP 0 944 184 A2

APPARATUS

OPTICAL TRANS-MITTER-RECEIVER

1c

FIRST OPTICAL SIGNAL L1, FIRST CONNECTION CHECK SIGNAL (FIRST MONITORING LIGHT) R1

2a

2b

1d

OPTICAL TRANS-MITTER-RECEIVER

APPARATUS

SECOND OPTICAL SIGNAL L2, SECOND CONNECTION CHECK SIGNAL (SECOND MONITORING LIGHT) R2

M1

M2

# FIG. 12

TRANSMITTING SECTION ~1c-1

FIRST CONNECTION CHECK ELECTRIC SIGNAL ~14A

LIGHT SOURCE DRIVE CIRCUIT

LIGHT EMITTING MEANS

FIRST OPTICAL SIGNAL L1, FIRST CONNECTION CHECK SIGNAL (FIRST MONITORING SIGNAL) R1

FIRST OPTICAL SIGNAL L1 FIRST CONNECTION CHECK SIGNAL (FIRST MONITORING SIGNAL) R1

TRANSMITTING SECTION 1c-1

SECOND CONNECTION CHECK ELECTRIC SIGNAL 14B

LIGHT EMITTING MEANS

LIGHT SOURCE DRIVE CIRCUIT

Tx, Data

2a

2b

LIGHT RECEIVING MEANS

COMPARISON SECTION

AMPLIFICA-TION SECTION

SECOND OPTICAL SIGNAL L2, SECOND CONNECTION CHECK SIGNAL (SECOND MONITORING SIGNAL) R2

SECOND OPTICAL SIGNAL L2, SECOND CONNECTION CHECK SIGNAL (SECOND MONITORING SIGNAL) R2

LIGHT RECEIVING MEANS

AMPLIFICA-TION SECTION

COMPARISON SECTION

REFERENC VOLTAGE

CONNECTION MONITORING SECTION

Rx, Data

RECEIVING SECTION

RECEIVING SECTION

Rx, Data

REFERENC VOLTAGE

CONNECTION MONITORING SECTION

1c-3

1c-2

1c-2

1c-3

# FIG. 13

# FIG. 14

| OPTICAL FIEER OUTSIDE DIAMETER | 1000 μm |
|---|---|
| SHEATH CONTOUR | 2.2 mm |
| SHEATH MATERIAL | POLYETHYLENE |
| TRANSMISSION LOSS | 14 dB / 100 m* |
| BAND | 160 MHz @ 100 m* |

$$\left( \begin{array}{l} \text{* : REFERENCE VALUES} \\ \text{WITH RESPECT TO} \\ \text{650nm MONICHROMATIC} \\ \text{PARALELL LIGHT} \end{array} \right)$$

# FIG. 15

LIGHT → OPTICAL FIBER

EXCITATION NA= 0.1